# EUROPÄISCHE PATENTANMELDUNG

(11) **EP 0 943 853 A2**
(43) Veröffentlichungstag der Anmeldung: **22.09.1999**
(21) Anmeldenummer: 99105584.9
(22) Anmeldetag: 16.03.1999
(51) Int. Cl.: F16L 17/10, F16J 15/46

(54) **Vorrichtung zur Befestigung eines drehbar gelagerten Hohlzylinders an seinem Aussenumfang**

(30) Priorität: 16.03.1998 DE 19811136
(71) Anmelder: Fleissner GmbH & Co. Maschinenfabrik, 63329 Egelsbach (DE)
(72) Erfinder: Fleissner, Gerold, 6300 Zug (CH)
(74) Vertreter: Neumann, Gerd, Dipl.-Ing.

(57) **Zusammenfassung**

Ein Hohlzylinder ist an seinem Außenumfang zu befestigen, wenn der zylindrische Innenmantel zu einem Behandlungsverfahren genutzt werden soll. Zur Herstellung dieser Befestigung ist nach der Erfindung vorgesehen, das stirnseitige Ende des Hohlzylinders von einem elastischen, aufblasbaren Schlauch zu umgeben, der über eine den Hohlzylinder umgebende ringförmige Klemmscheibe gegen den Außenumfang des Hohlzylinders gepreßt und die ihrerseits mit der Antriebseinheit drehfest verbunden ist.

## Beschreibung

Ein Hohlzylinder ist an seinem Außenumfang zu befestigen, wenn der Raum innerhalb des Hohlzylinders zu irgendwelchen Verfahrensvorgängen ungehindert genutzt werden soll. Dies ist z. B. der Fall, wenn an der Stirnseite eines solchen Hohlzylinders Fasern oder Pulp eingefüllt werden, um diese dann von innen nach außen durch die Öffnungen im Hohlzylinder herauszuwirbeln und insbesondere herauszusaugen. Die Bewegung der Fasern von innerhalb des Hohlzylinders nach außen zur Herstellung eines Vlieses aus diesen Fasern wird durch eine im Bereich des Innenumfangs achsparallel angeordnete und sich schnell drehende Nadelwalze unterstützt.

Der Hohlzylinder, hier der durchlässige Hohlzylinder muß zu seiner Drehung um seine Längsachse an den Stirnseiten drehbar gelagert sein. Es ist Aufgabe in der bezogenen Anmeldung 197 06 344.6 eine stirnseitige Verbindung des Hohlzylinders mit einer Lager- und/oder Antriebseinheit zu finden, die eine einfache elastische Rundumbefestigung des Hohlzylinders an der Einheit bewirkt. Die Lösung wurde darin gefunden, daß das stirnseitige Ende des Hohlzylinders von einem elastischen Ring umgeben ist, der über eine den Hohlzylinder umgebende ringförmige Klemmscheibe gegen den Außenumfang des Hohlzylinders gepreßt und die ihrerseits mit der Lager- oder Antriebseinheit drehfest verbunden ist. Der Hohlzylinder ist damit nicht mehr starr über einzelne Schrauben mit seinem Lagerring befestigt, sondern elastisch und rundum drehfest. Die Verbindung ist somit kraft-, aber nicht formschlüssig.

Aus Gründen des festen Sitzes des elastischen Ringes am Außenumfang des Hohlzylinders mußte die Klemmscheibe halbiert und der Ring in einer Klemmnut zwischen den beiden Hälften angeordnet werden. Es ist die Aufgabe der Erfindung diese Konstruktion zu vereinfachen, derart, daß eine schnellere Montage des drehfest zu haltenden Hohlzylinders möglich ist und gleichzeitig die Anpreßkraft des Ringes in Umfangsrichtung unabhängig von Klemmschrauben ist, die naturgemäß nur abschnittsweise rund um den Hohlzylinder angeordnet sein können.

Ausgehend von den Erkenntnissen nach der Hauptanmeldung besteht die gefundene Lösung darin, daß der elastische Ring als solcher als Schlauch ausgebildet ist. Nunmehr kann die Klemmscheibe aus einem Stück hergestellt werden, die mit einer radial nach innen offenen Ringnut den Hohlzylinder radial außen umfaßt. Mit Vorteil kann nunmehr der Schlauch nach Plazierung innerhalb der Ringnut der Klemmscheibe aufgeblasen werden, womit er sich gegen die Ringnut abstützend mit seiner Innenumfangsfläche gegen den Hohlzylinder bewegt und diesen ganz gleichmäßig rundum fixiert.

Selbstverständlich hat der elastische Luftschlauch ein Ventil. Dieses sollte im Falle dieser Verwendung radial nach außen gerichtet sein, und somit sollte die Klemmscheibe zur Aufnahme und leichteren Montage des Ventils mit einer sich bis zur Ringnut erstreckenden radial nach außen gerichteten Nut versehen sein, die stirnseitig der Klemmscheibe offen ist.

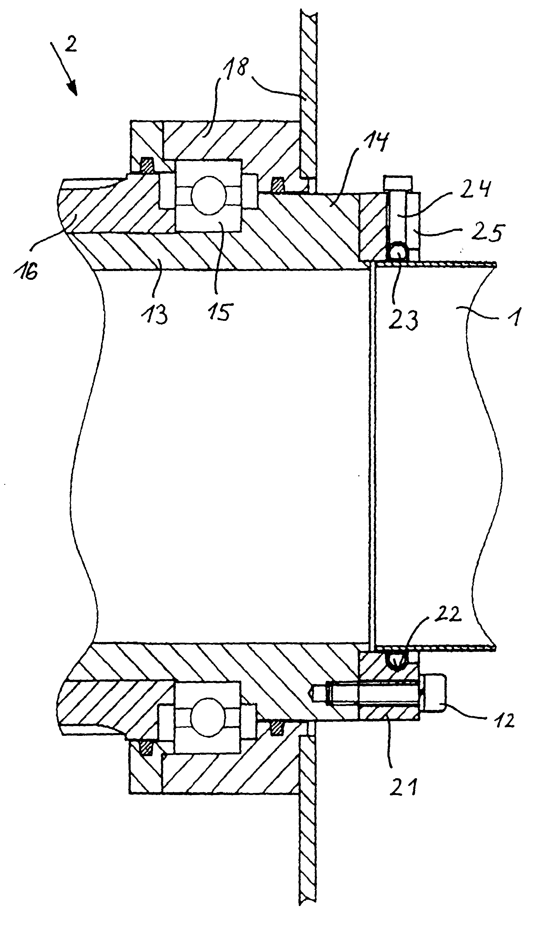

Eine Vorrichtung der erfindungsgemäßen Art ist in der Figur beispielhaft dargestellt. Sie zeigt im Querschnitt die eine Stirnseite eines Hohlzylinders, der über einen elastischen Schlauch mit einem Lagerring drehfest verbunden ist.

Der Hohlzylinder ist mit 1 bezeichnet. Er kann eine größere Länge aufweisen und insbesondere durchlässig perforiert sein. Er ist nicht formschlüssig, sondern elastisch gelagert, was sich bei seiner betriebsbedingten Drehung um seine Längsachse auswirkt. Innerhalb des Hohlzylinders ist im Bereich seines Innenumfangs achsparallel eine Bürstenwalze drehbar gelagert, die für die Verwirbelung der stirnseitig eingebrachten Fasern sorgt, hier jedoch nicht dargestellt ist.

Dieser Hohlzylinder 1 ist stirnseitig zu lagern und zur Drehung um seine Längsachse anzutreiben. Zur Verbindung mit dem Lagerring 2 ist an der Stirnseite des Hohlzylinders 1 eine Klemmscheibe 21 vorgesehen, die den Hohlzylinder 1 mit nur einem geringfügig größeren Durchmesser umgibt. Radial nach innen gerichtet weist die Klemmscheibe 21 eine Ringnut 22 auf, dei zur Aufnahme eines elastischen Schlauches 23 dient. Der lichte Durchmesser der Ringnut 22 der Klemmscheibe 21 sollte kleiner als der Umfang des aufgeblasenen Schlauches 23 sein. Die Ringnut 22 ist auf der in der Zeichnung rechten Seite in der radialen Höhe teilweise offen ausgebildet, damit der Schlauch 23 bei der Montage auch dann in die Ringnut 22 bewegt werden kann, wenn der Hohlzylinder 1 wie dargestellt in der Gesamtvorrichtung plaziert ist. Gleichzeitig ist für das Ventil 24 des Schlauches 23, das sich radial nach außen erstreckt, eine zur Stirnseite der Klemmscheibe 21 offene Nut 25 vorgesehen. Wenn nunmehr der Schlauch 23 wie dargestellt in der Klemmscheibe 21 plaziert ist, kann er durch das Ventil 24 aufgeblasen werden. Damit wird sich sein Innenumfang gegen den Hohlzylinder 1 rundum gleichmäßig bewegen und den Hohlzylinder drehfest und genau zentrisch halten. Mit Vorteil erfolgt damit die Anpressung des Schlauches 23 unabhängig von bisher über den Umfang ungleichmäßig angeordneten Preßschrauben.

Wie bereits in der Hauptanmeldung beschrieben ist der Lager- wie auch der Antriebsring 2 im Innendurchmesser gleich groß wie der Hohlzylinder 1 hergestellt. Er besteht aus einem breiteren Flanschring 13, an dessen radial außen vorgesehenen Flansch 14 einerseits die Klemmscheibe 21 mittels über den Umfang verteilten Schrauben 12 angeschraubt ist und andererseits ein Kugellager 15 anliegt. Das Kugellager 15 ist auf der einen Stirnseite des Hohlzylinders 1 über einen aufgeschrumpften Befestigungsring 16 und auf der anderen Stirnseite des Hohlzylinders über ein aufgeschrumpftes Zahnrad seitlich gehalten. Radial außerhalb ist das Kugellager 15 mit dem ortsfesten, also nicht drehenden Gehäuse 18 verbunden.

An dem stillstehenden Gehäuse 18 ist also über die Kugellager 15 der Hohlzylinder 1 über die Lager- bzw. Antriebsringe 2 drehbar gelagert. Der Antriebsring 3 ist mittels eines nicht dargestellten Zahnantriebs um seine Längsachse angetrieben. Die beiden Stirnseiten des Hohlzylinders 1 und auch die der Lagerringe 2 sind für den Ein- und Austritt von Materialien offen. Der Ein- und Austritt der Materialien erfolgt über nicht dargestellte Öffnungen in der Gehäusewandung.

## Patentansprüche

1. Vorrichtung zur Befestigung eines drehbar gelagerten Hohlzylinders an seinem Außenumfang an einer stirnseitig angeordneten Lager- oder Antriebseinheit zur ungehinderten Nutzung des zylindrischen Innenmantels, wobei das stirnseitige Ende des Hohlzylinders von einem elastischen Ring umgeben ist, der über eine den Hohlzylinder umgebende ringförmige Klemmscheibe gegen den Außenumfang des Hohlzylinders gepreßt und die ihrerseits mit der Lager- oder Antriebseinheit drehfest verbunden ist, nach Patentanmeldung 197 06 344.6, dadurch gekennzeichnet, daß der elastische Ring als elastischer Schlauch (23) ausgebildet ist.

2. Vorrichtung nach Anspruch 1, dadurch gekennzeichnet, daß der Schlauch (23) als Luftschlauch mit einem z. B. radial nach außen abstehenden Ventil (24) ausgebildet ist und der Schlauch (24) nach Montage innerhalb der Klemmscheibe (21) aufblasbar und radial nach innen rundum gleichmäßig gegen den Außenumfang des Hohlzylinders (1) mittels der eingeblasenen Preßluft bewegbar ist.

3. Vorrichtung nach Anspruch 1 oder 2, dadurch gekennzeichnet, daß die Klemmscheibe (21) aus nur einem Ring besteht, der mit einer radial nach innen offenen Ringnut (22) den Hohlzylinder (1) radial außen umgibt.

4. Vorrichtung nach Anspruch 2 oder 3, dadurch gekennzeichnet, daß die Ringnut (21) in der Klemmscheibe (21) im lichten Querschnitt kleiner als der Querschnitt des aufgeblasenen Schlauches (23) ausgebildet ist.

5. Vorrichtung nach einem der vorhergehenden Ansprüche, dadurch gekennzeichnet, daß die Ringnut (22) in der Klemmscheibe (21) auf der einen der beiden axial gerichteten Seite zumindest teilweise offen ausgebildet ist.

6. Vorrichtung nach einem der vorhergehenden Ansprüche, dadurch gekennzeichnet, daß die Klemmscheibe (21) zur Aufnahme und Montage des radial abstehenden Ventils (24) des Schlauches (23) radial nach außen mit einer sich bis zur Ringnut (22) erstreckenden Nut (25) stirnseitig geöffnet ist.
